(19) **Europäisches Patentamt**
**European Patent Office**
**Office européen des brevets**

(11) **EP 1 670 184 B1**

(12) **EUROPEAN PATENT SPECIFICATION**

(45) Date of publication and mention
of the grant of the patent:
**22.10.2008 Bulletin 2008/43**

(51) Int Cl.:
***H04L 12/28*** *(2006.01)*

(21) Application number: **05257526.3**

(22) Date of filing: **07.12.2005**

(54) **Modifying the communication speed based on the occupied state of the communication bandwidth**

Ändern der Kommunikationsgeschwindigkeit auf Grund des Belegtzustandes der Kommunikationsbandbreite

Modifier la vitesse de communication à base d'état occupé de la largeur de bande de communication

(84) Designated Contracting States:
**DE FR GB**

(30) Priority: **08.12.2004 JP 2004356013
29.04.2005 US 117550**

(43) Date of publication of application:
**14.06.2006 Bulletin 2006/24**

(73) Proprietor: **Fujitsu Ltd.
Kawasaki-shi, Kanagawa 211-8588 (JP)**

(72) Inventors:
• **Yamauchi, Hitoshi c/o Fujitsu Ltd.
Kawasaki-shi, Kanagawa 211-8588 (JP)**

• **Matsukura, Ryuichi c/o Fujitsu Ltd.
Kawasaki-shi, Kanagawa 211-8588 (JP)**

(74) Representative: **Gibbs, Christopher Stephen et al
Haseltine Lake
Lincoln House
300 High Holborn
London WC1V 7JH (GB)**

(56) References cited:
**WO-A-20/05046105        US-A- 5 857 147
US-A1- 2002 154 656**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a communications method including a group of terminal units and a relay apparatus for conducting wireless communications with the terminal units, a communications system employing the communications method, a relay apparatus used in the communications system, and a computer program embodying the relay apparatus. Particularly, the present invention relates to a communications method, a communications system, a relay apparatus, and a recording medium where the quality of communications can hardly be declined.

In recent years, IP telephones using the VoIP (voice over IP) technique have spread rapidly in homes and offices. Most recently, mobile IP telephones over wireless LAN have begun to receive attention, and they are now introduced into a part of companies.

In a communications system using a radio communications technique such as a wireless LAN, two or more terminal units provided in the service area of each relay apparatus called an access point receive the same signal. For avoiding any collision in communications between the terminal units, the relay apparatus employs a technology of CSMA/CA (carrier sense multiple access with collision avoidance) where the terminal units can communicate with each other over a commonly assigned range of the communication bandwidth.

Such a wireless LAN includes a fall-back communication function such as communication frame retransmission or link-speed optimization for sustaining the communication while maintaining the quality of the communication even when the communication is disturbed by any interference on the route of the communication or an increasing distance between the relay apparatus and the terminal unit or between the two terminal units. The communication frame retransmission is a function for acknowledging the transmission of communication frames through examining the receipt of an ACK (acknowledgment) frame at the MAC (media access control) layer and upon finding that the ACK frame has not been received, re-transmitting the communication frames. The link-speed optimization is a function for, when the receipt of the communication frames is not confirmed after the transmission of the communication frames, repeating the retransmission of the communication frames until the ACK frame is received and lowering at steps the link speed or data transmission speed between the relay apparatus and the corresponding terminal unit. In the IEEE 802.11b based wireless communications system at, for example, the link speed is reduced initially from 11 Mbps to 5.5 Mbps and then to 2 Mbps and 1 Mbps. When the communication returns back to its favorable condition, the link speed is increased to improve the throughput as a whole.

When the condition of communication declines, the function of communication frame retransmission repeats the transmission of communication frames thus creating a delay. In addition, the transmission of communication frames will be repeated until the link speed drops down from a high rate to a low rate ensuring the stable communication due to the function of optimizing the link speed, thus generating a delay. When the retransmission of communication frames fails to communicate with the target terminal unit, the communication frames are discarded thus creating undesired packet loss. Moreover, the function of optimizing the link speed permits the link speed to be increased when the condition of communication returns back to its favorable level. As the condition of communication is varied, the link speed will change up and down repeatedly thus requiring the retransmission of communication frames and producing a delay. In known FTP (file transfer protocol) or HTTP (hyper text transfer protocol) communication technology, such delay or packet loss may be negligible. However, they will cause unwanted deterioration in the quality of audio or video signals in a streaming communication service such as the VoIP telephone system.

When the link speed drops down, the relay apparatus increases the rate of occupying the communication bandwidth to be assigned to the terminal unit in order to maintain the amount of data to be transmitted per unit time for the streaming service. For example, if the link speed drops from 11 Mbps to 5.5 Mbps, the communication bandwidth assigned to the terminal unit has to be doubled for transferring the predetermined amount of data.

For overcoming the above described drawback, a communications method is introduced as disclosed in Japanese Patent Laid-open Publication 2003-244105, in which the cycle of changing the link speed is varied at each setting of the link speed thus to improve the efficiency of optimizing the link speed. For varying different rates of the link speed at equal cycles, the cycle has to be increased to match the lowest link speed, which takes more time for transmitting the communication frames. Accordingly, the cycle of changing the link speed is varied at each setting of the link speed. More specifically, when the link speed is high enough to transmit the communication frames within a short time but susceptible to the condition of communication such as a state of communication waves, it can be modified at cycles of a short period. When the link speed is low enough to take a considerable length of time for transmitting the communication frames but less susceptible to the condition of communication, it can be modified at cycles of a long period. The communications method disclosed in Japanese Patent Laid-open Publication 2003-244105 may allow the link speed to be increased at higher efficiency under the environment where the condition of communication remains less varied and the link speed is rather stable, thus improving the throughput as a whole.

BRIEF SUMMARY OF THE INVENTION

The present invention has been developed in view of the above aspects and its object is to provide a communications method for determining the link speed depending on the occupied state of the communication bandwidth thus to attenuate the effect of the condition of communication, minimize a change in the link speed, and prevent the transmission of communication frames from being repeated, a communication system employing the communications method, a relay apparatus used in the communication system, and a recording medium in which a computer program embodying the relay apparatus is stored. For further information on such systems one may consult US 2002/154656 (Kitchin), which shows a bandwidth management system in a network with variable bit rate, and WO 2005/046105 (Interdigital), published 19 May 2005, which adjusts system parameters on the basis of certain measured variables.

In a first aspect of the present invention, as defined in claim 1, a communications method is provided using a group of terminal units and a relay apparatus for conducting wireless communications with the terminal units. The relay apparatus is arranged to assign each terminal unit with an available range of the communication bandwidth which is not occupied and send/receive data with the terminal unit over the available range of the communication bandwidth at a communication speed predetermined for the terminal unit. In particular, the method allows the relay apparatus to modify the communication speed of the terminal unit in response to the occupied state of the communication bandwidth.

In another aspect of the present invention, as defined in claim 3, a relay apparatus is provided having means for conducting wireless communications with a group of terminal units and means for assigning each of the terminal units with an available range of the communication bandwidth which is not occupied and sending/receiving data with the terminal unit over the available range of the communication bandwidth at a communication speed predetermined for the terminal unit. In particular, the relay apparatus comprises means for recording the occupied state of the communication bandwidth and means for modifying the communication speed of the terminal unit in response to the recorded occupied state of the communication bandwidth.

The relay apparatus may further comprise means for detecting a change in the number of the terminal units being connected or a change in the condition of communication at the terminal unit and means for modifying the communication speed of each of the terminal unit or assigning again the terminal unit with a favorable range of the communication bandwidth in response to the change.

The relay apparatus may further comprise means for receiving a demand for starting a communication from one of the terminal units which is not connected, wherein the means for modifying the communication speed for communication with the one of the terminal units which demands the start of communication.

The relay apparatus may further comprise means for examining from the available range of the communication bandwidth determined by the calculating means whether a desired range of the communication bandwidth is available or not for communication with the one of the terminal units which demands the start of communication, means for, when it is judged that the desired range of the communication bandwidth is not available, detecting the condition of communication with the terminal units being connected, means for selecting the terminal unit of which the communication speed is to be increased through reviewing the detected condition of communication, and means for increasing the communication speed of the selected terminal unit.

The relay apparatus may further comprise means for measuring a decline in the conditions of communication at the terminal unit being connected, means for detecting the condition of communication with the other terminal units, means for selecting the terminal unit of which the communication speed is to be increased through reviewing the detected condition of communication, means for increasing the communication speed of the selected terminal unit, means for assigning again the terminal unit of which the condition of communication is declined with a favorable range of the communication bandwidth, and means for decreasing the communication speed of the terminal unit of which the condition of communication has declined.

The relay apparatus may be modified in that the data sent and received with the terminal units can be data for the streaming service which has to be transmitted at a predetermined speed.

The present invention also relates to a corresponding computer program.

According to the present invention, the communication speed is determined in dependence on the occupied state of the communication bandwidth. Preferably the communication speed is modified to as low a rate as possible, which is less susceptible to the condition of communication such as a state of communication wave, thus ensuring the stability of the communication. Also, since the cycle of modifying the communication speed is minimized, the number of times for transmitting the communication frames at the change of the communication speed can be decreased, thus eliminating any delay derived from the retransmission of the communication frames. Moreover, as the communication bandwidth is effectively assigned, its shortage can be avoided during the communications.

According to embodiments of the present invention, when the number of the terminal units connected to the relay apparatus is changed, e.g., another terminal unit being disconnected demands to start a communication and the communication bandwidth is not available for the another terminal unit starting a communication, the communication speed of the terminal unit of which the condition of communication is higher is hastened thus to produce a spare range of the communication bandwidth assigned to the other terminal unit which demands to start a communication. This allows more of the terminal units to be connected for conducting the communications. Also, as the communication speed of the terminal unit of which the condition of communication is higher is hastened, any decline in the condition of communication of the terminal unit caused by increasing the communication speed can be minimized, thus permitting the retransmission of communication frames to be carried out at less frequency for modifying the communication speed. As a result, any delay derived from repeating of the transmission of communication frames will be minimized.

According to embodiments of the present invention, when the condition of communication declines, e.g., a caller operating the terminal unit moves into a low communication signal area during the conversation, it can be returned back to a stable level by increasing the communication speed of the other terminal unit of which the condition of communication is better to create a spare range of the communication bandwidth while decreasing the communication speed of the terminal unit of the caller thus to widen the assigned range of the communication bandwidth. Also, as the other terminal unit of which the condition of communication is higher is increased in communication speed to produce a spare range of the communication bandwidth, its condition of communication remains stable. This permits the retransmission of communication frames to be carried out at a lower frequency for modifying the communication speed. As a result, any delay derived from repeating of the transmission of communication frames will be minimized.

In the communications method, the communications system, the relay apparatus, or the recording medium according to the present invention, using the relay apparatus as an access point for a group of the terminal units such as mobile IP telephones which are connected by wireless communication to the relay apparatus, both the available range of the communication bandwidth assigned to each of the terminal units and the communication speed of the terminal unit over the available range of the communication bandwidth are favorably determined by the relay apparatus. Particularly, the communication speed can be modified to as low a rate as possible.

This permits the communication speed to stay low and thus be less susceptible to the effect of the condition of communication such as a state of communication wave, thus producing an advantageous effect such as stability of the communications. Also, the communication speed need not be increased when the condition of communication remains stable and the frequency of modifying the communication speed can be decreased. Accordingly, the number of times for transmitting the communication frames at the change of the communication speed can be minimized. This will produce another advantageous effect such as elimination of any delay derived from the retransmission of the communication frames. In addition, since the communication bandwidth is assigned at higher efficiency, it can be minimized in the shortage of the communication bandwidth during the communication thus giving a further advantageous effect. Moreover, a minimum of the packet loss caused by repeating the transmission of communication frames will be encountered hence preventing the quality of audio signal from declining and giving an advantageous effect.

According to embodiments of the present invention, when a change in the number of the terminal units connected to the relay apparatus is found, e.g., another terminal unit demands to start a communication and an available range of the communication bandwidth assigned to the other terminal unit is not available, the communication speed of the terminal unit of which the condition of communication is higher is hastened to produce a spare range of the communication bandwidth which is thus assigned to the another terminal unit. This allows a higher number of the terminal units to be connected for communication. Also, the terminal unit of which the condition of communication is higher is increased in communication speed to create a spare range of the communication bandwidth; any decline in the condition of communication of the terminal unit caused by increasing the communication speed can be minimized thus permitting the retransmission of communication frames to be carried out at less frequency for modifying the communication speed. Consequently, as a further advantageous effect, any delay derived from repeating the transmission of communication frames will be minimized.

According to embodiments of the present invention, when the condition of communication is lowered, e.g., a caller operating the terminal unit moves into a low communication signal area during the conversation, it can be returned back to a stable level by increasing the communication speed of the other terminal unit of which the condition of communication is higher to create a spare range of the communication bandwidth while decreasing the communication speed of the terminal unit of the caller thus to widen the assigned range of the communication bandwidth. Also, as the other terminal unit of which the condition of communication is higher is increased in communication speed to produce a spare range of the communication bandwidth, its condition of communication is unlikely to become unstable. This permits the retransmission of communication frames to be carried out at less frequency for modifying the communication speed. As a result, any delay derived from repeating of the transmission of communication frames will be minimized.

The above and further objects and features of the invention will more fully be apparent from the following detailed description of examples, with accompanying drawings.

BRIEF DESCRIPTION OF THE DRAWINGS

Fig. 1 is an explanatory view schematically showing an arrangement of a communications system of the present invention;

Fig. 2 is a block diagram showing an arrangement of components in the communications system of the present invention;

Fig. 3 is an explanatory view schematically showing an example of management table stored in a relay apparatus of the present invention;

Fig. 4A and 4B are flowcharts showing a procedure of starting a new communication at the relay apparatus in the communications system of the present invention;

Fig. 5A and 5B are flowcharts showing a procedure of improving the condition of communication at the relay apparatus in the communications system of the present invention; and

Fig. 6 is a flowchart showing a procedure of slowing down the communication speed at the relay apparatus in the communications system of the present invention.

DETAILED DESCRIPTION

As described above, the conventional communications method disclosed in Japanese Patent Laid-open Publication 2003-244105 can hardly sustain the communication quality when the conditions of communication change abruptly or remain unstable. If a terminal unit is moved from a communication-easy area to the communication-difficult area, its communication quality will sharply decrease. It is assumed for compensation that the link speed has thus to be shifted from 11 Mbps to 1 Mbps. As the conventional method repeats the transmission of communication frames for decreasing the link speed by steps, it will generate a delay. Also, when the link speed is varied up and down in any unstable condition of the communication, the transmission of communication frames is repeated, thus creating a delay.

The present invention has been developed in view of the foregoing aspects and its object is to provide a communications method for determining the link speed in response to the use of communication bandwidths to minimize the effect of the condition of the communication and decrease a change in the link speed so that the retransmission of communication frames can be avoided, a communications system employing the communications method, a relay apparatus used in the communications system, and a recording medium on which a computer program for embodying the relay apparatus is stored. They will be realized by the following embodiments.

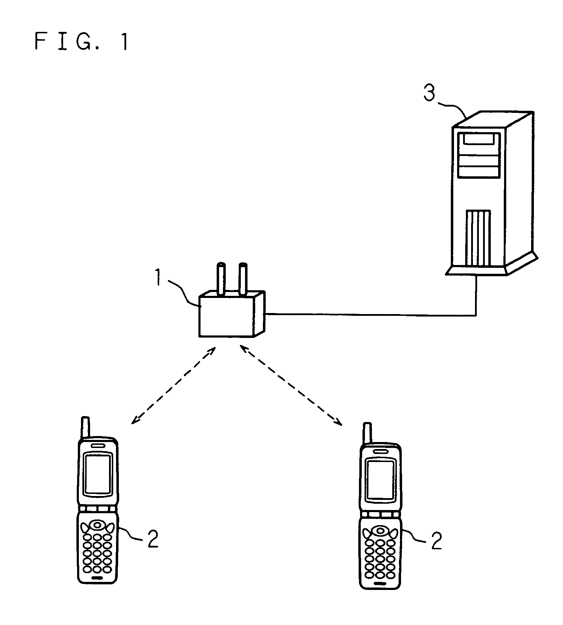

The preferred embodiments of the present invention will be described in more detail referring to the relevant drawings. Fig. 1 is an explanatory view schematically showing an arrangement of the communications system of the present invention. Denoted by 1 in Fig. 1 is a relay apparatus of the present invention provided as an access point with a communication computer for transferring radio communications. The relay apparatus 1 allows a group of terminal units 2, such as IP mobile telephones, to perform radio communications with each other over an available system such as CSMA/CA. The relay apparatus 1 is connected to a communication management center 3 provided with a stream server computer for controlling the communications between the terminal units 2 with the use of an applicable format such as SIP (session initiation protocol). The communications management center 3 identifies each communication to be controlled from its identifier.

The communications management center 3 develops a wireless LAN between the relay apparatus 1 and the terminal units 2 and can thus allow the relay apparatus 1 to provide the terminal units 2 over the wireless LAN with a streaming service such as VoIP service based on the QoS (quality of service) technology determined by IEEE 802.11e.

In such a conventional wireless LAN, the communication bandwidth is shared by a group of the terminal units 2. Accordingly, the streaming service such as VoIP service is carried out through giving priority to transferring the communication frames controlled by the communications management center 3. Also, the communication bandwidth is dynamically assigned to each of the terminal units 2 by the relay apparatus 1. Moreover, the communication speed (the link speed) assigned to each of the terminal units 2 can be determined dynamically by the relay apparatus 1. The wider the communication bandwidth assigned to the terminal unit 2 by the relay apparatus 1 or the higher the communication speed, the more the amount of data to be transferred can be increased. However, when the condition of the communication such as the transmission of waves is low, the communication quality at higher speeds will remain high only with much difficulty.

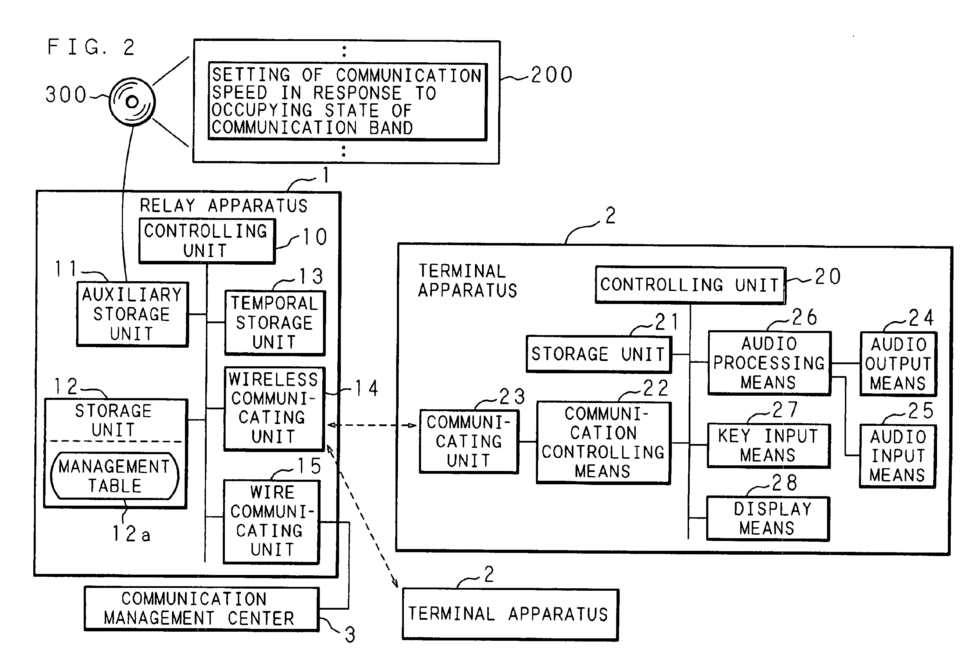

Fig. 2 is a block diagram showing an arrangement of components in the communications system of the present invention. The relay apparatus 1 comprises a controlling unit 10, such as a CPU, for controlling the entire action of the apparatus, an auxiliary storage unit 11, such as a CD-ROM drive, for reading from a recording medium 300, such as a CD-ROM, a variety of data including a computer program 200 of the present invention, a storage unit 12, such as a hard disk drive, provided in which the data read from the auxiliary storage unit 11 are saved, and a temporal storage unit 13, such as a RAM, for temporarily storing the data. A variety of data including the computer program 200 of the present invention are picked up from the storage unit 12 and saved in the temporal storage unit 13 such as a RAM before use. The computer program 200 is received by the controlling unit 10 where its contained procedures are executed for operating the communication computer as a function of the relay apparatus 1. The relay apparatus 1 also includes a wireless communication unit 14 for carrying out radio communications with the terminal units 2 and a wire communicating unit 15 for carrying out wire communications with the communications management center 3. The storage unit 12 in the relay apparatus 1 has a storage region thereof provided as a management table 12a for controllably determining communication-specific data including the communication speed and the communication bandwidths to be used for communication with the terminal units 2. The management table 12a is not limited to the storage region of the storage unit 12 in the relay apparatus 1 but may be implemented by a storage region of a storage unit in any other apparatus which is connected to the relay apparatus 1.

The terminal unit 2 comprises a controlling unit 20 for controlling the entire action of the terminal unit and a storage unit 21, such as a ROM or RAM, for storing a variety of data including computer programs and their relevant data used for carrying out desired processing actions. The controlling unit 20 is also arranged to control the action of a communication controlling unit 22 for controlling communications which in turn controls the action of a communicating unit 23 consisting mainly of an antenna and its relevant circuit for transmitting and receiving digital signals of the data for telephone communications. The controlling unit 20 further controls the action of an audio processing unit 26 for processing analog audio signals to be released from an audio outputting unit 24 such as a loudspeaker(s) and analog audio signals received from an audio inputting unit 25 such as a microphone. The processing action of the audio processing unit 26 involves converting a digital audio signal into the analog audio signal to be released from the audio outputting unit 24 and the analog audio signal received from the audio inputting unit 25 into a digital audio signal. The terminal unit 2 further includes a key input unit 27 for inputting commands and alphanumeric data through key entry under the controlling action of the controlling unit 20 and a display unit 28, such as a liquid crystal display, for displaying the key entry data or any other desired data received or to be transmitted.

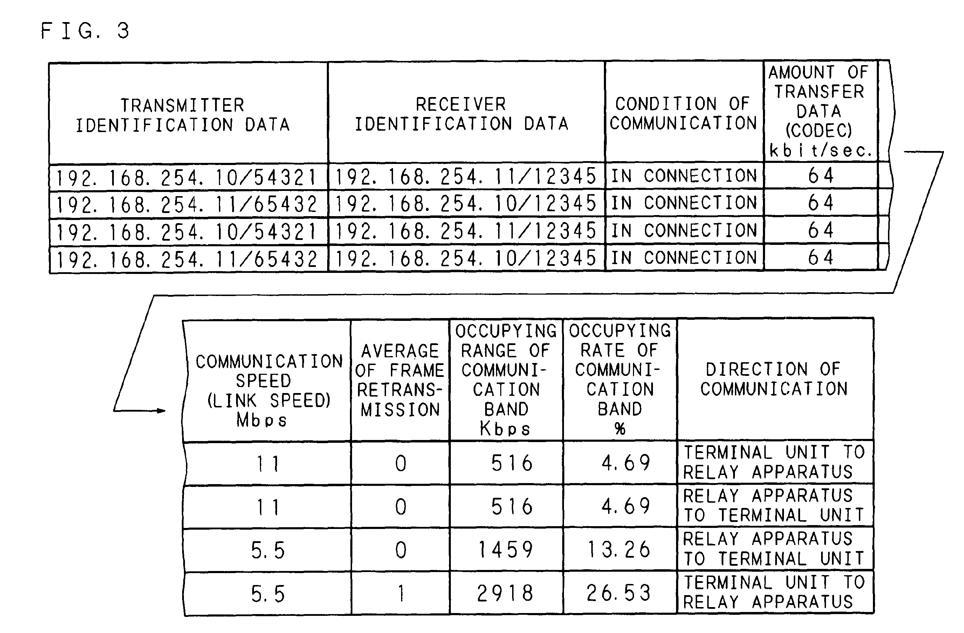

Fig. 3 is an explanatory view schematically showing an example of the management table 12a saved in the relay apparatus 1 of the present invention. The management table 12a indicates a list of records for communications at priority, e.g., in the streaming service of the relay apparatus 1. More particularly, the list of records in the management table 12a may include identification data for identifying the terminal units 2 as the transmitter and the receiver, data about the condition of the communication, the amount of data to be transferred, the communication speed (the link speed), the average of the retransmission of frames, the communication bandwidth being used, the rate of occupying the communication bandwidth, and the direction of the communication which correspond to each other. In the management table 12a of Fig. 3, the first terminal unit 2 denoted by an IP address of 192.168.254.10 is assigned with the receiving port 12345 and the transmitting port 54321 for communication with the relay apparatus 1 at a communication speed of 11 Mbps while the second terminal unit 2 denoted by an IP address of 192.168.254.11 is assigned with the receiving port 12345 and the transmitting port 65432 for communication with the relay apparatus 1 at a communication speed of 5.5 Mbps. Simultaneously, the relay apparatus 1 permits the communications between the first terminal unit 2 and the second terminal unit 2. The list of records in the management table 12a is updated in succession.

The IP address of 193.168.254.10 and the port number 54321 of the first terminal unit 2 represent the identification data of the transmitter terminal 2 while the IP address of 193.168.254.11 and the port number 65432 of the second terminal unit 2 represent the identification data of the receiver terminal 2.

The data about the condition of communication indicates the condition of communication such as "busy line". The amount of data to be transferred represents a data size needed for the streaming service (for example, at 64 kbit/s). The communication speed is a link speed between the relay apparatus 1 and the terminal unit 2 which is selected from 11 Mbps, 5.5 Mbps, 2 Mbps, and 1 Mbps in the IEEE 802.11b wireless communication standard. The average of the retransmission of frames is an average of the number of times between, for example, the latest ten communication frames for transmission of communication frames one by one.

The occupying range of the communication bandwidth is a size of bandwidth required for transmission of the amount of data from each terminal unit at the rate of exchangeable data per unit time (the communication bandwidth) provided by the relay apparatus 1. In the management table 12a of Fig. 3, the occupying range of the communication bandwidth is expressed in Kbps as calculated from Equation 1 shown below. The rate of occupying the communication bandwidth is hence a percentage (%) of the bandwidth being used in the available communication bandwidth. It would be understood that the rate of occupying the communication bandwidth is expressed by a length of time (msec) in a period or a percentage (%) of time.

$$\text{The occupying bandwidth} = \{\text{amount of data} \; ´$$
$$(11/\text{communication speed}) + (\text{occupying bandwidth in waiting period}$$
$$+ \text{header size} \; ´ (11/\text{communication speed}) + \text{occupying bandwidth at}$$
$$\text{ACK}) \; ´ \text{number of frames per second}\} \; ´ (\text{average of frame}$$
$$\text{retransmission} + 1) \qquad \text{Equation 1}$$

The direction of the communication is either from the terminal unit to the relay apparatus or from the relay apparatus to the terminal unit.

The action of each component in the communications system of the present invention will now be described. In brief, the communications system of the present invention saves a particular range of the communication bandwidth to be assigned to the streaming service in the wireless LAN of the relay apparatus 1 and determines the communication speed so that the communication bandwidth being used as the streaming service is not greater than the particular range of the communication bandwidth to be assigned to the streaming service. More particularly, the procedure is as follows.

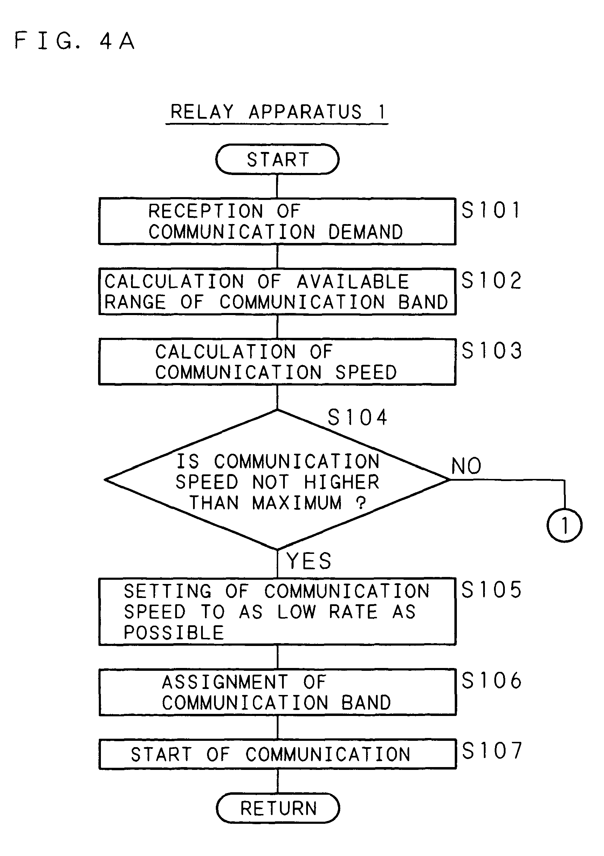

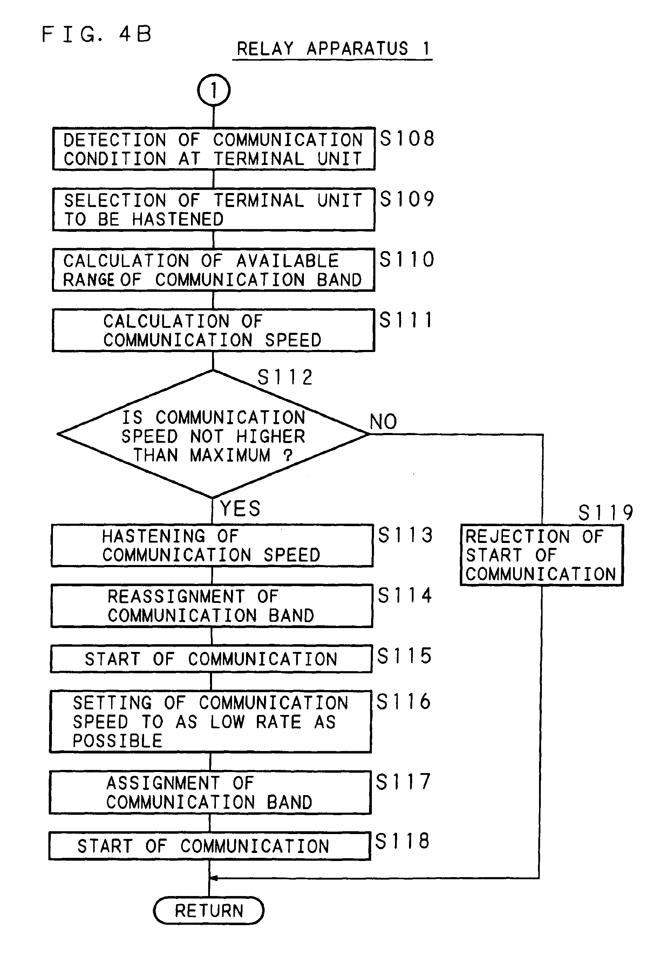

Fig. 4A and 4B are flowcharts showing an action of the relay apparatus 1 in the communications system of the present invention for starting a new communication. The action starts when the relay apparatus 1 commands the controlling unit 10 to carry out the computer program 200 saved in the temporal storage unit 13 and permits the wireless communicating unit 14 to receive a demand of connection at the streaming service from a terminal unit 2 which wants to start a communication (S101). Using the list of records in the management table 12a, an available range of the communication bandwidth assigned to the streaming service is determined (S102). This is followed by calculating the communication speed for transmission of data of a given size or namely 64 kbit/s in this embodiment within the determined communication bandwidth (S103). It is then examined whether the calculated communication speed is not higher than its maximum level, namely 11 Mbps in this embodiment (S104). The steps S102 to S104 are provided for obtaining an available range of the communication bandwidth assigned to the terminal unit 2 which wants to start a communication. The terminal unit 2 which wants to start a communication will be referred to as a transmitter terminal unit 2a for ease of description.

When it is judged at Step S104 that the communication speed determined at Step S103 is not higher than its maximum level and the available range of the communication bandwidth is thus obtained for the transmitter terminal unit 2a starting the communication (yes at S104), the relay apparatus 1 commands the controlling unit 10 to assign the transmitter terminal unit 2 with as low a rate of the communication speed as possible through the available communication bandwidth (S105) and with a particular range of the communication bandwidth corresponding to the low communication speed (S106). Then, the communication is commenced at the low communication speed over the determined range of the communication bandwidth (S107). Both the low communication speed and the determined range of the communication bandwidth are recorded in the management table 12a.

When it is judged at Step S104 that the communication speed determined at Step S103 is higher than its maximum level and the available range of the communication bandwidth is not obtained for transmitter terminal unit 2a (no at S104), the relay apparatus 1 commands the controlling unit 10 to detect the condition of communication between the two terminal units 2 (S108) and select the terminal unit 2 over the condition of the communication for increasing the communication speed (S109). The selection over the condition of the communication involves selecting the terminal unit 2 of which the condition of communication is higher through examining the frame retransmission rate, the communication speed, and the strength of communication signals in relation to the terminal units 2 being connected. More particularly, the terminal unit 2 which is the lowest in the frame retransmission rate is selected as the first priority. When two or more of the terminal units 2 which are the lowest in frame retransmission rate are found, their lowest in terms of communication speed is chosen. When two or more of the terminal units 2 which are the lowest in the communication speed are present, their highest in the strength of communication signals is chosen. The condition of the communication is examined in order of priority from the frame retransmission rate to the communication speed and the strength of communication signals. Two or more of the terminal units 2 may be selected for increasing the communication speed. The terminal unit 2 of which the communication speed is increased will be referred to as a selected terminal unit 2b for ease of description.

This is followed by the relay apparatus 1 commanding the controlling unit 10 to determine an available range (which has not been occupied) of the communication bandwidth at the higher rate of the communication speed of the selected terminal unit 2b (S110), calculate the communication speed for the transmitter terminal unit 2a carrying out the streaming service to transmit a desired amount of data within the available rage of the communication bandwidth (S111), and examine whether the calculated communication speed is not higher than its maximum level (S112). The steps S 110 to S 112 are provided for examining whether the communication bandwidth is obtained or not for the transmitter terminal unit 2a which wants to start a communication.

When it is judged at Step 112 that the communication speed determined at Step S111 is not higher than its maximum level and the communication bandwidth required for the transmitter terminal unit 2a starting the communication is obtained (yes at S112), the relay apparatus 1 commands the controlling unit 10 to increase the communication speed of the selected terminal unit 2 (S113), assign again the terminal unit 2 with another range of the communication bandwidth corresponding to the increased communication speed (S114), and start the communication at the higher speed over the newly assigned communication bandwidth (S115). As both the communication speed and the communication bandwidth are modified, the communication bandwidth assigned to the transmitter terminal unit 2a can be optimized. In succession, the relay apparatus 1 commands the controlling unit 10 to assign the transmitter terminal unit 2a with as low a rate of communication speed as possible through the increased communication bandwidth (S116) and with a particular range of the communication bandwidth corresponding to the low communication speed (S117). Then, the communication is commenced at the low communication speed over the determined range of the communication bandwidth (S118). Both the low communication speed and the determined range of the communication bandwidth are recorded in the management table 12a.

When it is judged at Step S112 that the communication speed determined at Step S111 is higher than its maximum level and the available range of the communication bandwidth is not obtained for the transmitter terminal unit 2a starting the communication (no at S112), the relay apparatus 1 commands the controlling unit 10 to deliver from the wireless communicating unit 14 to the transmitter terminal unit 2a a signal indicating that its location is out of the communicable area and reject the start of the communication, or the relay apparatus 1 commands the controlling unit 10 to deliver from the wire communicating unit 15 to the communication management center 3 identification data for identifying the transmitter terminal unit 2a and a signal indicating that its location is out of the communicable area and reject the start of the communication (S119). Even if Step S112 has judged that the communication bandwidth is obtained, the start of the communication will be rejected when the condition of communication with the transmitter terminal unit 2a remains unstable.

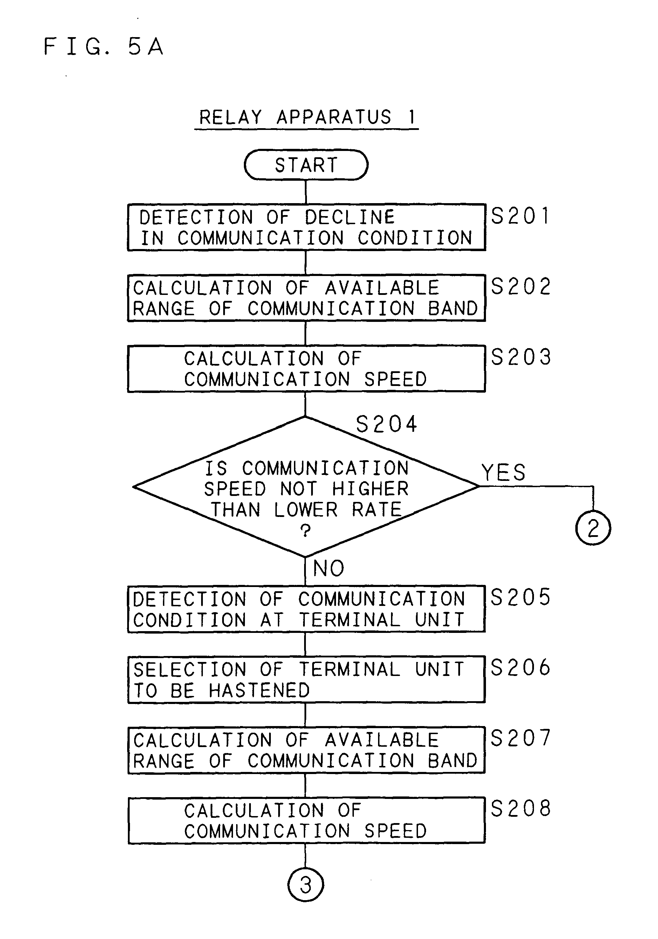

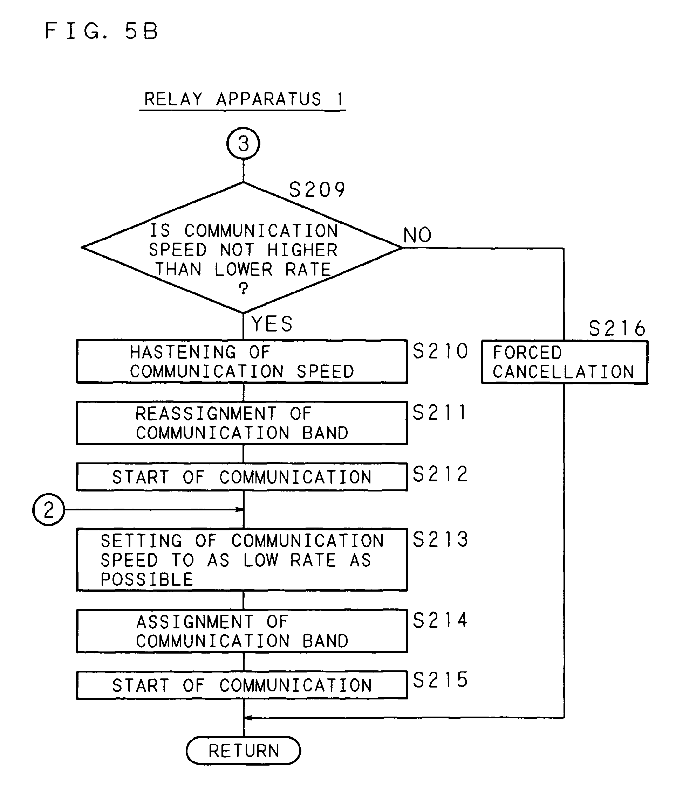

Fig. 5A and 5B are flowcharts showing an action of the relay apparatus 1 in the communications system of the present invention for improving the condition of communication. The action starts with the relay apparatus 1 commanding the controlling unit 10 to carry out the computer program 200 saved in the temporal storage unit 13 and acknowledge that the terminal unit 2 connected to the wireless communicating unit 14 is unfavorable in the condition of communication (S201). This is followed by determining the available range of the communication bandwidth assigned to the streaming service referring to the list of records in the management table 12a (S202). The detection of the unfavorable condition of communication with the terminal apparatus 2 at Step S201 is based on the frame retransmission rate and the strength of communication signals recorded in the management table 12a. When the frame retransmission rate exceeds its upper limit level or abruptly deteriorates or when the strength of communication signals drops down to its lower limit level or abruptly deteriorates, it is judged that the condition of communication is turned unstable. The terminal unit 2 of which the condition of communication is turned unstable will be referred to as an unstable terminal unit 2c for ease of description.

The relay apparatus 1 of the present invention commands the controlling unit 10 to determine the communication speed for the unstable terminal unit 2c conducting the streaming service to transmit a desired amount of data within the determined available range of the communication bandwidth (S203). It is then examined whether the communication speed determined at S203 is not higher than a low rate of the communication speed of the unstable terminal unit 2c (S204).

When it is judged at Step S204 that the communication speed determined at Step S203 is higher than the low rate of the communication speed (no at S204), the relay apparatus 1 commands the controlling unit 10 to detect the condition of communication of each of the terminal units 2 being connected (S205) and select the terminal unit 2 to be increased in the communication speed through examining the condition of communication (S206). The terminal unit 2 selected will be referred to as a selected terminal unit 2d for ease of the description.

This is followed by the relay apparatus 1 commanding the controlling unit 10 to determine an available range (which has not been occupied) of the communication bandwidth at the higher rate of the communication speed of the selected terminal unit 2d (S207) and calculate the communication speed for the unstable terminal unit 2c carrying out the streaming service to transmit a desired amount of data within the available range of the communication bandwidth (S208). It is then examined whether or not the communication speed calculated at S208 is not higher than the low communication speed of the unstable terminal unit 2c (S209).

When it is judged at Step 209 that the communication speed determined at Step S208 is not higher than the low communication speed (yes at S209), the relay apparatus 1 commands the controlling unit 10 to increase the communication speed of the selected terminal unit 2d (S210), assign again the terminal unit 2d with another range of the communication bandwidth corresponding to the increased communication speed (S211), and start the communication at the higher speed over the newly assigned communication bandwidth (S212). In succession, the relay apparatus 1 commands the controlling unit 10 to assign the unstable terminal unit 2d with as low a rate of the communication speed as possible through the increased communication bandwidth (S213) and with a particular range of the communication bandwidth corresponding to the low communication speed (S214). Then, the communication is commenced at the low communication speed over the determined range of the communication bandwidth (S215). Both the determined range of the communication bandwidth and the low communication speed are recorded in the management table 12a.

When it is judged at Step S204 that the communication speed determined at Step S203 is not higher than the low rate of the communication speed (yes at S204), the action jumps to Step S213 before carrying out the following steps.

When it is judged at Step S209 that the communication speed determined at Step S208 is higher than the low rate of the communication speed (no at S209), the relay apparatus 1 commands the controlling unit 10 to deliver from the wireless communicating unit 14 to the unstable terminal unit 2c a signal indicating that its location is out of the communicable area and forcibly disconnect the communication, or the relay apparatus 1 commands the controlling unit 10 to deliver from the wire communicating unit 15 to the communication management center 3 identification data for identifying the transmitter terminal unit 2a and a signal indicating that its location is out of the communicable area and reject the start of the communication (S216). With the communication speed of the unstable terminal unit 2c being decreased, the condition of communication is regarded as unstable at Step S201 when it is so. Also, when the terminal unit 2 of which the communication speed has been increased by the action of newly starting a communication shown in the flowchart of Fig. 4A and 4B or by the action of improving the condition of communication is declined in the condition of communication, its decline in communication condition can equally be detected at Step 201. However, during the foregoing steps, the communication bandwidth for the streaming service may temporarily be unavailable due to busy connections. For compensation, a communication bandwidth for data transmission at lower priority can be temporarily used or an auxiliary communication bandwidth can be determined and saved in advance.

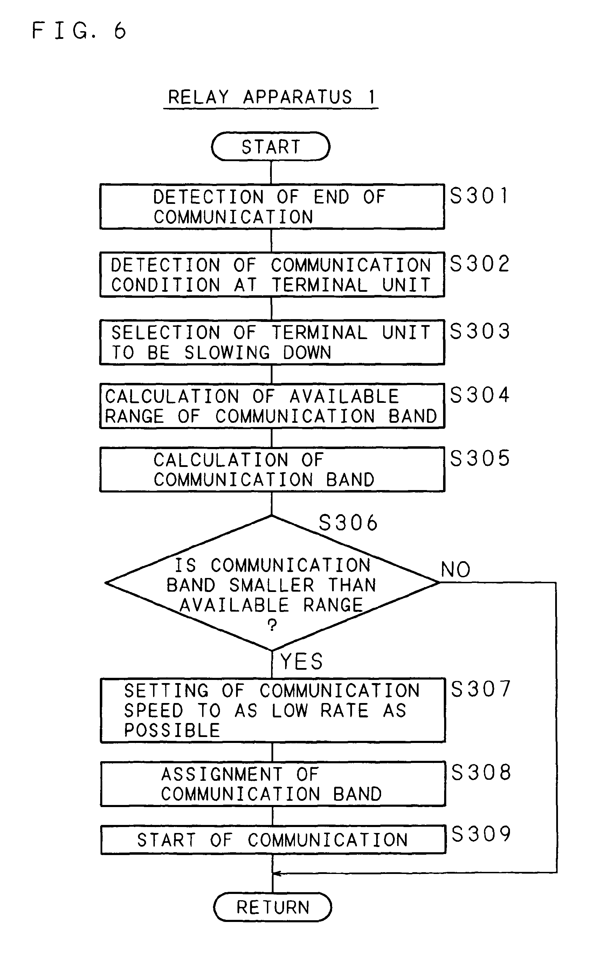

Fig. 6 is a flowchart showing an action of the relay apparatus 1 in the communications system of the present invention for decreasing the communication speed. The action starts with the relay apparatus 1 commanding the controlling unit 10 to carry out the computer program 200 saved in the temporal storage unit 13 and acknowledge that the terminal unit 2 connected to the wireless communicating unit 14 terminates its communication (S301). This is followed by detecting the condition of communication between the terminal units 2 (S302) and selecting the terminal unit 2 to be decreased in the communication speed referring to the condition of communication detected (S303). The selection over the condition of the communication involves selecting the terminal unit 2 of which the condition of the communication is most unfavorable through examining the frame retransmission rate, the communication speed, and the strength of communication signals in relation to the terminal units being connected. More particularly, the terminal unit 2 which is the highest in the frame retransmission rate is selected as the terminal unit 2 of which the condition of the communication is most unfavorable at the first priority. When two or more of the terminal units 2 which are the highest in frame retransmission rate are found, their highest in terms of communication speed is chosen as the terminal unit 2 of which the condition of the communication is most unfavorable. When two or more of the terminal units 2 which are the highest in the communication speed are present, their lowest in the strength of communication signals is chosen as the terminal unit 2 of which the condition of the communication is most unfavorable. The condition of the communication is examined in order of priority from the frame retransmission rate to the communication speed and the strength of communication signals. The selected terminal unit 2 of which the communication speed is decreased will be referred to as a selected terminal unit 2e for ease of the description.

This is followed by the relay apparatus 1 commanding the controlling unit 10 to determine an available range (which has not been occupied) of the communication bandwidth which is enlarged at the end of the communication of the terminal unit 2 (S304) and calculate a range of the communication bandwidth for transmission of a desired amount of data in the streaming service when the communication speed of the selected terminal unit 2e has been decreased within the available range of the communication bandwidth (S305). It is then judged whether or not the communication bandwidth calculated is not greater than the available range (S306).

When it is judged at Step S306 that the communication bandwidth calculated at Step S305 is not greater than the available range (yes at S306), the relay apparatus 1 commands the controlling unit 10 to decrease the communication speed of the selected terminal unit 2e to as low a rate as possible (S307) and assign again the terminal unit 2e with a particular range of the communication bandwidth corresponding to the low rate of the communication speed (S308). Then, the communication is commenced at the low communication speed over the determined range of the communication bandwidth (S309). Both the determined range of the communication bandwidth and the low communication speed are recorded in the management table 12a.

When it is judged at Step S306 that the communication bandwidth calculated at Step S305 is greater than the available range (no at S306), the step of decreasing the communication speed is not carried out but the flowchart is terminated.

The present invention is not limited to the embodiments where the communication speed is set to as low a rate as possible depending on the condition of communication but may allow the communication speed to be arbitrarily determined for improving the stability of the communications. More specifically, the communication speed can be determined from an average of the communication speeds of all the terminal units which are being connected at the time. When a greater number of the terminal units are involved for communications thus to produce a shortage of the communication bandwidths, the average of the communication speeds (link speed or data rate) will be increased. When a smaller number of the terminal units are being connected to permit an abundance of the communication bandwidths, the average of the communication speeds will drop down. According to the present invention, the communication speed at the start of another communication is determined from an average of the communication speeds calculated at the end of the preceding communication. Hence, the determined communication speed can be hastened when an available range of the communication bandwidth is small due to a greater number of the terminal units being connected at the time. Alternatively, the determined communication speed can be slowed down when the available range of the communication bandwidth is abundant due to a less number of the terminal units being connected at the time. This allows the communication speed of each terminal unit to be increased at less frequency, even when a new communication is started or the existing communication declines in quality, than the case that the communication speed is set to as low a rate as possible. As a result, the communication can remain stable.

Also, the present invention is not limited to the application of IP telephones in the VoIP technology but may be applied with equal success to any wireless communications where a desired amount or more of data has to be transmitted smoothly.

## Claims

1.  A communications method for use in a group of terminal units (2) and a relay apparatus (1) which conducts wireless communications with the terminal units (2), comprising the steps of:

    calculating (S102) for each terminal unit (2) an available range of unoccupied communication bandwidth;
    ascertaining (S103) a communication speed for sending and receiving data with the terminal unit (2) using the available range of the communication bandwidth that results in an actual communication speed predetermined for the terminal unit (2); and
    assigning (S106) a range of the communication bandwidth from the available range of the communication bandwidth;

    **characterised by** the step of setting (S105) the communication speed to the lowest rate allowed by the said available range of the communication bandwidth.

2.  A communications method according to claim 1, including the further step of determining (S104) whether the said ascertained communication speed is greater than is allowed by the relay apparatus and, if it is, increasing the communication speed of another terminal unit (2b) to increase the available range of unoccupied communication bandwidth for the first terminal unit (2).

3.  A relay apparatus (1) comprising:

    means (14) for conducting wireless communications with a group of terminal units (2);
    means for calculating for each of the terminal units (2) an available range of the unoccupied communication bandwidth;
    means for ascertaining a communication speed for sending and receiving data to and from the terminal unit (2) using the available range of the communication bandwidth that results in an actual communication speed predetermined for the terminal unit (2);
    means (12a) for recording the occupied state of the communication bandwidth; and
    means for assigning a range of the communication bandwidth in response to the recorded occupied state of the communication bandwidth;

    **characterised by** means for modifying the communication speed of the terminal unit (2) to as low a rate as is allowed by the said available range of the communication bandwidth.

4.  A relay apparatus (1) according to claim 3, further comprising:

    means for detecting a change in the number of terminal units (2) connected or a change in the condition of communication at the terminal unit (2); and
    means for modifying the communication speed of each of the terminal unit (2) or assigning again to the terminal unit (2) an available range of the communication bandwidth in response to the change.

5.  A relay apparatus (1) according to claim 3, further comprising means for receiving a demand for starting a communication from one of the terminal units (2) which is not connected, wherein
the means for modifying the communication speed determines the communication speed for communication with the one of the terminal units (2) that demands the start of communication.

6. A relay apparatus (1) according to claim 5 , further comprising:

means for examining from the available range of the communication bandwidth determined by the calculating means whether a desired range of the communication bandwidth is available for communication with one of the terminal units (2) that demands the start of communication;
means for detecting when it is judged that the desired range of the communication bandwidth is not available, the condition of communication with the terminal units (2) being connected;
means for selecting the terminal unit (2) whose communication speed is to be increased through reviewing the detected condition of communication; and
means for increasing the communication speed of the selected terminal unit (2).

7. A relay apparatus (1) according to claim 3, further comprising:

means for measuring a deterioration in the condition of communication at the terminal unit (2) being connected;
means for detecting the condition of communication with the other terminal units (2);
means for selecting a terminal unit (2) whose communication speed is to be increased through reviewing the detected condition of communication; and
means for increasing the communication speed of the selected terminal unit (2);
**characterised by** means for assigning again to the terminal unit (2) whose condition of communication has deteriorated an available range of the communication bandwidth; and
means for decreasing the communication speed of the terminal unit (2) whose condition of communication has deteriorated.

8. A relay apparatus (1) according to any of claims 3 to 7, comprising a processor constituting the said means for performing the various operations.

9. A recording medium in which a computer program for a computer is stored, the computer program comprising code means adapted to control a relay apparatus for conducting wireless communications with a group of terminal units (2), assigning (2), to each of the terminal units (2) an available range of unoccupied communication bandwidth, ascertaining a communication speed for sending data to and receiving data from the terminal unit (2) using the available range of the communication bandwidth that results in an actual communication speed predetermined for the terminal unit (2),
assigning a range of the communication bandwidth from the available range of the communication bandwidth; and setting the communication speed of the terminal unit (2) to as low a rate as possible over the said available range of the communication bandwidth.

**Patentansprüche**

1. Kommunikationsverfahren zur Verwendung in einer Gruppe von Terminaleinheiten (2) und einer Relaisvorrichtung (1), die eine drahtlose Kommunikation mit den Terminaleinheiten (2) ausführt, mit den Schritten:

Berechnen (S102), für jede Terminaleinheit (2), eines verfügbaren Bereiches einer unbelegten Kommunikationsbandbreite;
Ermitteln (S103) einer Kommunikationsgeschwindigkeit zum Senden und Empfangen von Daten mit der Terminaleinheit (2) unter Verwendung des verfügbaren Bereiches der Kommunikationsbandbreite, die zu einer tatsächlichen Kommunikationsgeschwindigkeit führt, die für die Terminaleinheit (2) vorbestimmt ist; und
Zuordnen (S106) eines Bereiches der Kommunikationsbandbreite von dem verfügbaren Bereich der Kommunikationsbandbreite;

**gekennzeichnet durch** den Schritt zum Einstellen (S105) der Kommunikationsgeschwindigkeit auf die niedrigste Rate, die **durch** den genannten verfügbaren Bereich der Kommunikationsbandbreite zulässig ist.

2. Kommunikationsverfahren nach Anspruch 1, mit dem weiteren Schritt zum Bestimmen (S104), ob die ermittelte Kommunikationsgeschwindigkeit größer als durch die Relaisvorrichtung zulässig ist, und falls das so ist, Erhöhen der Kommunikationsgeschwindigkeit einer anderen Terminaleinheit (2b), um den verfügbaren Bereich der unbelegten Kommunikationsbandbreite für die erste Terminaleinheit (2) zu vergrößern.

**3.** Relaisvorrichtung (1) mit:

einem Mittel (14) zum Durchführen einer drahtlosen Kommunikation mit einer Gruppe von Terminaleinheiten (2);
einem Mittel zum Berechnen, für jede der Terminaleinheiten (2), eines verfügbaren Bereiches der unbelegten Kommunikationsbandbreite;
einem Mittel zum Ermitteln einer Kommunikationsgeschwindigkeit zum Senden und Empfangen von Daten an die und von der Terminaleinheit (2) unter Verwendung des verfügbaren Bereiches der Kommunikationsbandbreite, die zu einer tatsächlichen Kommunikationsgeschwindigkeit führt, die für die Terminaleinheit (2) vorbestimmt ist;
einem Mittel (12a) zum Aufzeichnen des belegten Zustandes der Kommunikationsbandbreite; und
einem Mittel zum Zuordnen eines Bereiches der Kommunikationsbandbreite als Antwort auf den aufgezeichneten belegten Zustand der Kommunikationsbandbreite;
**gekennzeichnet durch** ein Mittel zum Modifizieren der Kommunikationsgeschwindigkeit der Terminaleinheit (2) auf eine Rate, die so niedrig wie **durch** den verfügbaren Bereich der Kommunikationsbandbreite zulässig ist.

**4.** Relaisvorrichtung (1) nach Anspruch 3, ferner mit:

einem Mittel zum Detektieren einer Veränderung der Anzahl von verbundenen Terminaleinheiten (2) oder einer Veränderung der Kommunikationsbedingung in der Terminaleinheit (2); und
einem Mittel zum Modifizieren der Kommunikationsgeschwindigkeit jeder der Terminaleinheiten (2) oder erneuten Zuordnen eines verfügbaren Bereiches der Kommunikationsbandbreite zu der Terminaleinheit (2) als Antwort auf die Veränderung.

**5.** Relaisvorrichtung (1) nach Anspruch 3, ferner mit einem Mittel zum Empfangen einer Aufforderung zum Starten einer Kommunikation von einer der Terminaleinheiten (2), die nicht verbunden ist, bei der
das Mittel zum Modifizieren der Kommunikationsgeschwindigkeit die Kommunikationsgeschwindigkeit für die Kommunikation mit derjenigen der Terminaleinheiten (2) bestimmt, die den Start der Kommunikation verlangt.

**6.** Relaisvorrichtung (1) nach Anspruch 5, ferner mit:

einem Mittel zum Prüfen, ob von dem verfügbaren Bereich der Kommunikationsbandbreite, der durch das Berechnungsmittel bestimmt wurde, ein gewünschter Bereich der Kommunikationsbandbreite für die Kommunikation mit derjenigen der Terminaleinheiten (2) verfügbar ist, die den Start der Kommunikation verlangt;
einem Mittel zum Detektieren, wenn beurteilt wurde, dass der gewünschte Bereich der Kommunikationsbandbreite nicht verfügbar ist, der Kommunikationsbedingung mit den Terminaleinheiten (2), die verbunden sind;
einem Mittel zum Selektieren der Terminaleinheit (2), deren Kommunikationsgeschwindigkeit zu erhöhen ist, durch Nachprüfen der detektierten Kommunikationsbedingung; und
einem Mittel zum Erhöhen der Kommunikationsgeschwindigkeit der selektierten Terminaleinheit (2).

**7.** Relaisvorrichtung (1) nach Anspruch 3, ferner mit:

einem Mittel zum Messen einer Verschlechterung der Kommunikationsbedingung in der Terminaleinheit (2), die verbunden ist;
einem Mittel zum Detektieren der Kommunikationsbedingung bei den anderen Terminaleinheiten (2);
einem Mittel zum Selektieren einer Terminaleinheit (2), deren Kommunikationsgeschwindigkeit zu erhöhen ist, durch Nachprüfen der detektierten Kommunikationsbedingung; und
einem Mittel zum Erhöhen der Kommunikationsgeschwindigkeit der selektierten Terminaleinheit (2);
**gekennzeichnet durch** ein Mittel zum erneuten Zuordnen eines verfügbaren Bereiches der Kommunikationsbandbreite zu der Terminaleinheit (2), deren Kommunikationsbedingung sich verschlechtert hat; und
einem Mittel zum Verringern der Kommunikationsgeschwindigkeit der Terminaleinheit (2), deren Kommunikationsbedingung sich verschlechtert hat.

**8.** Relaisvorrichtung (1) nach einem der Ansprüche 3 bis 7, die einen Prozessor umfasst, der die genannten Mittel zum Ausführen der verschiedenartigen Operationen darstellt.

**9.** Aufzeichnungsmedium, in dem ein Computerprogramm für einen Computer gespeichert ist, welches Computerprogramm ein Codemittel umfasst, das dafür ausgelegt ist, um eine Relaisvorrichtung zu steuern, zum Durchführen einer drahtlosen Kommunikation mit einer Gruppe von Terminaleinheiten (2), Zuordnen eines verfügbaren Bereiches einer unbelegten Kommunikationsbandbreite zu jeder der Terminaleinheiten (2), Ermitteln einer Kommunikationsgeschwindigkeit zum Senden von Daten an die und Empfangen von Daten von der Terminaleinheit (2) unter Verwendung des verfügbaren Bereiches der Kommunikationsbandbreite, die zu einer tatsächlichen Kommunikationsgeschwindigkeit führt, die für die Terminaleinheit (2) vorbestimmt ist, Zuordnen eines Bereiches der Kommunikationsbandbreite von dem verfügbaren Bereich der Kommunikationsbandbreite; und Einstellen der Kommunikationsgeschwindigkeit der Terminaleinheit (2) auf eine so niedrige Rate wie über den verfügbaren Bereich der Kommunikationsbandbreite möglich.

## Revendications

**1.** Procédé de communication pour une utilisation dans un groupe d'unités terminales (2) et un appareil de relais (1) qui met en oeuvre des communications sans fil avec les unités terminales (2), comprenant les étapes de :

calcul (S102), pour chaque unité terminale (2), d'une plage disponible de bande passante de communication non occupée ;

évaluation (S103) d'une vitesse de communication pour envoyer et recevoir des données avec l'unité terminale (2) en utilisant la plage disponible de la bande passante de communication qui aboutit à une vitesse de communication réelle prédéterminée pour l'unité terminale (2) ; et

assignation (S106) d'une plage de la bande passante de communication à partir de la plage disponible de la bande passante de communication,

**caractérisé par** l'étape consistant à établir (S105) la vitesse de communication au débit le plus faible autorisé par ladite plage disponible de la bande passante de communication.

**2.** Procédé de communication selon la revendication 1, incluant l'étape supplémentaire consistant à déterminer (S104) si oui ou non ladite vitesse de communication évaluée est supérieure à celle autorisée par l'appareil de relais et si c'est le cas, consistant à augmenter la vitesse de communication d'une autre unité terminale (2b) pour augmenter la plage disponible de bande passante de communication non occupée pour la première unité terminale (2).

**3.** Appareil de relais (1) comprenant :

un moyen (14) pour mettre en oeuvre des communications sans fil avec un groupe d'unités terminales (2) ;

un moyen pour calculer, pour chacune des unités terminales (2), une plage disponible de la bande passante de communication non occupée ;

un moyen pour évaluer une vitesse de communication pour envoyer et recevoir des données sur et depuis l'unité terminale (2) en utilisant la plage disponible de la bande passante de communication qui aboutit à une vitesse de communication réelle prédéterminée pour l'unité terminale (2) ;

un moyen (12a) pour enregistrer l'état occupé de la bande passante de communication ; et

un moyen pour assigner une plage de la bande passante de communication en réponse à l'état occupé enregistré de la bande passante de communication,

**caractérisé par** un moyen pour modifier la vitesse de communication de l'unité terminale (2) selon un débit aussi faible qu'autorisé par ladite plage disponible de la bande passante de communication.

**4.** Appareil de relais (1) selon la revendication 3, comprenant en outre :

un moyen pour détecter une modification du nombre d'unités terminales (2) connectées ou une modification au niveau de la condition de communication au niveau de l'unité terminale (2) ; et

un moyen pour modifier la vitesse de communication de chacune des unités terminales (2) ou pour assigner à nouveau à l'unité terminale (2) une plage disponible de la bande passante de communication en réponse à la modification.

**5.** Appareil de relais (1) selon la revendication 3, comprenant en outre un moyen pour recevoir une demande pour démarrer une communication depuis celle des unités terminales (2) qui n'est pas connectée, dans lequel :

le moyen pour modifier la vitesse de communication détermine la vitesse de communication pour une communication avec celle des unités terminales (2) qui demande le début de communication.

6. Appareil de relais (1) selon la revendication 5, comprenant en outre :

un moyen pour examiner, à partir de la plage disponible de la bande passante de communication déterminée par le moyen de calcul, si oui ou non une plage souhaitée de la bande passante de communication est disponible pour une communication avec celle des unités terminales (2) qui demande le début de communication ;
un moyen pour détecter, lorsqu'il est apprécié que la plage souhaitée de la bande passante de communication n'est pas disponible, la condition de communication avec les unités terminales (2) qui sont connectées ;
un moyen pour sélectionner l'unité terminale (2) dont la vitesse de communication doit être augmentée par l'intermédiaire d'une révision de la condition de communication détectée ; et
un moyen pour augmenter la vitesse de communication de l'unité terminale sélectionnée (2).

7. Appareil de relais (1) selon la revendication 3, comprenant en outre :

un moyen pour mesurer une détérioration de la condition de communication au niveau de l'unité terminale (2) qui est connectée ;
un moyen pour détecter la condition de communication avec les autres unités terminales (2) ;
un moyen pour sélectionner une unité terminale (2) dont la vitesse de communication doit être augmentée par l'intermédiaire d'une révision de la condition de communication détectée ; et
un moyen pour augmenter la vitesse de communication de l'unité terminale sélectionnée (2),
**caractérisé par** un moyen pour assigner à nouveau à l'unité terminale (2) dont la condition de communication s'est détériorée une plage disponible de la bande passante de communication ; et
un moyen pour diminuer la vitesse de communication de l'unité terminale (2) dont la condition de communication s'est détériorée.

8. Appareil de relais (1) selon l'une quelconque des revendications 3 à 7, comprenant un processeur constituant ledit moyen pour réaliser les diverses opérations.

9. Support d'enregistrement dans lequel un programme d'ordinateur pour un ordinateur est stocké, le programme d'ordinateur comprenant un moyen de code adapté pour commander un appareil de relais pour mettre en oeuvre des communications sans fil avec un groupe d'unités terminales (2), pour assigner à chacune des unités terminales (2) une plage disponible de bande passante de communication non occupée, pour évaluer une vitesse de communication pour envoyer des données sur et recevoir des données depuis l'unité terminale (2) en utilisant la plage disponible de la bande passante de communication qui conduit à une vitesse de communication réelle prédéterminée pour l'unité terminale (2), pour assigner une plage de la bande passante de communication à partir de la plage disponible de la bande passante de communication et pour établir la vitesse de communication de l'unité terminale (2) à un débit aussi faible que possible sur ladite plage disponible de bande passante de communication.

FIG. 1

FIG. 2

SETTING OF COMMUNICATION SPEED IN RESPONSE TO OCCUPYING STATE OF COMMUNICATION BAND ~200

300

**1 RELAY APPARATUS**

CONTROLLING UNIT ~10

11 AUXILIARY STORAGE UNIT

13 TEMPORAL STORAGE UNIT

WIRELESS COMMUNICATING UNIT ~14

12 STORAGE UNIT
MANAGEMENT TABLE
12a

15 WIRE COMMUNICATING UNIT

COMMUNICATION MANAGEMENT CENTER 3

**2 TERMINAL APPARATUS**

CONTROLLING UNIT ~20

21 STORAGE UNIT

26 AUDIO PROCESSING MEANS

24 AUDIO OUTPUT MEANS

23 COMMUNICATING UNIT

22 COMMUNICATION CONTROLLING MEANS

27 KEY INPUT MEANS

25 AUDIO INPUT MEANS

28 DISPLAY MEANS

2 TERMINAL APPARATUS

EP 1 670 184 B1

## FIG. 3

| TRANSMITTER IDENTIFICATION DATA | RECEIVER IDENTIFICATION DATA | CONDITION OF COMMUNICATION | AMOUNT OF TRANSFER DATA (CODEC) kbit/sec. |
|---|---|---|---|
| 192. 168. 254. 10/54321 | 192. 168. 254. 11/12345 | IN CONNECTION | 64 |
| 192. 168. 254. 11/65432 | 192. 168. 254. 10/12345 | IN CONNECTION | 64 |
| 192. 168. 254. 10/54321 | 192. 168. 254. 11/12345 | IN CONNECTION | 64 |
| 192. 168. 254. 11/65432 | 192. 168. 254. 10/12345 | IN CONNECTION | 64 |

| COMMUNICATION SPEED (LINK SPEED) Mbps | AVERAGE OF FRAME RETRANS-MISSION | OCCUPYING RANGE OF COMMUNI-CATION BAND Kbps | OCCUPYING RATE OF COMMUNI-CATION BAND % | DIRECTION OF COMMUNICATION |
|---|---|---|---|---|
| 11 | 0 | 516 | 4.69 | TERMINAL UNIT TO RELAY APPARATUS |
| 11 | 0 | 516 | 4.69 | RELAY APPARATUS TO TERMINAL UNIT |
| 5.5 | 0 | 1459 | 13.26 | RELAY APPARATUS TO TERMINAL UNIT |
| 5.5 | 1 | 2918 | 26.53 | TERMINAL UNIT TO RELAY APPARATUS |

EP 1 670 184 B1

FIG. 4A

RELAY APPARATUS 1

# FIG. 4B

RELAY APPARATUS 1

① 

| DETECTION OF COMMUNICATION CONDITION AT TERMINAL UNIT | S108 |

| SELECTION OF TERMINAL UNIT TO BE HASTENED | S109 |

| CALCULATION OF AVAILABLE RANGE OF COMMUNICATION BAND | S110 |

| CALCULATION OF COMMUNICATION SPEED | S111 |

S112

IS COMMUNICATION SPEED NOT HIGHER THAN MAXIMUM ?  — NO

YES

| HASTENING OF COMMUNICATION SPEED | S113 |

| REASSIGNMENT OF COMMUNICATION BAND | S114 |

| START OF COMMUNICATION | S115 |

| SETTING OF COMMUNICATION SPEED TO AS LOW RATE AS POSSIBLE | S116 |

| ASSIGNMENT OF COMMUNICATION BAND | S117 |

| START OF COMMUNICATION | S118 |

S119

| REJECTION OF START OF COMMUNICATION |

RETURN

FIG. 5A

RELAY APPARATUS 1

```
        ( START )
            │
┌──────────────────────────┐
│ DETECTION OF DECLINE      │ S201
│ IN COMMUNICATION CONDITION│
└──────────────────────────┘
            │
┌──────────────────────────┐
│ CALCULATION OF AVAILABLE  │ S202
│ RANGE OF COMMUNICATION BAND│
└──────────────────────────┘
            │
┌──────────────────────────┐
│ CALCULATION OF            │ S203
│ COMMUNICATION SPEED       │
└──────────────────────────┘
            │
            S204
         ╱──────╲
       ╱ IS COMMUNICATION ╲      YES
      ╱ SPEED NOT HIGHER   ╲──────────→ (2)
      ╲  THAN LOWER RATE   ╱
       ╲       ?         ╱
         ╲──────╱
            │ NO
┌──────────────────────────┐
│ DETECTION OF COMMUNICATION│ S205
│ CONDITION AT TERMINAL UNIT│
└──────────────────────────┘
            │
┌──────────────────────────┐
│ SELECTION OF TERMINAL UNIT│ S206
│ TO BE HASTENED            │
└──────────────────────────┘
            │
┌──────────────────────────┐
│ CALCULATION OF AVAILABLE  │ S207
│ RANGE OF COMMUNICATION BAND│
└──────────────────────────┘
            │
┌──────────────────────────┐
│ CALCULATION OF            │ S208
│ COMMUNICATION SPEED       │
└──────────────────────────┘
            │
           (3)
```

## FIG. 5B

RELAY APPARATUS 1

③

S209

IS COMMUNICATION
SPEED NOT HIGHER
THAN LOWER RATE
?

NO

YES

| | |
|---|---|
| HASTENING OF COMMUNICATION SPEED | S210 |

| | |
|---|---|
| FORCED CANCELLATION | S216 |

| | |
|---|---|
| REASSIGNMENT OF COMMUNICATION BAND | S211 |

| | |
|---|---|
| START OF COMMUNICATION | S212 |

②

| | |
|---|---|
| SETTING OF COMMUNICATION SPEED TO AS LOW RATE AS POSSIBLE | S213 |

| | |
|---|---|
| ASSIGNMENT OF COMMUNICATION BAND | S214 |

| | |
|---|---|
| START OF COMMUNICATION | S215 |

RETURN

FIG. 6

RELAY APPARATUS 1

```
              ( START )
                  |
  +---------------------------------+
  | DETECTION OF END OF             | S301
  | COMMUNICATION                   |
  +---------------------------------+
                  |
  +---------------------------------+
  | DETECTION OF COMMUNICATION      | S302
  | CONDITION AT TERMINAL UNIT      |
  +---------------------------------+
                  |
  +---------------------------------+
  | SELECTION OF TERMINAL UNIT      | S303
  | TO BE SLOWING DOWN              |
  +---------------------------------+
                  |
  +---------------------------------+
  | CALCULATION OF AVAILABLE        | S304
  | RANGE OF COMMUNICATION BAND     |
  +---------------------------------+
                  |
  +---------------------------------+
  | CALCULATION OF                  | S305
  | COMMUNICATION BAND              |
  +---------------------------------+
                  |
              S306
           /            \          NO
       IS COMMUNICATION
       BAND SMALLER THAN  ----------+
       AVAILABLE RANGE              |
           ?                        |
           YES                      |
  +---------------------------------+
  | SETTING OF COMMUNICATION        | S307
  | SPEED TO AS LOW RATE AS         |
  | POSSIBLE                        |
  +---------------------------------+
                  |                 |
  +---------------------------------+
  | ASSIGNMENT OF                   | S308
  | COMMUNICATION BAND              |
  +---------------------------------+
                  |                 |
  +---------------------------------+
  | START OF COMMUNICATION          | S309
  +---------------------------------+
                  |  <--------------+
              ( RETURN )
```

22

**EP 1 670 184 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244105 A
- US 2002154656 A
- WO 2005046105 A